# EUROPEAN PATENT APPLICATION

(11) **EP 1 453 244 A2**
(43) Date of publication of application: **01.09.2004**
(21) Application number: 04001940.8
(22) Date of filing: 29.01.2004
(51) Int. Cl.: H04L 12/26, H04M 3/22

(54) **Quality of service (QOS) metric computation in voice over IP systems**

(30) Priority: 28.02.2003 US 377442
(71) Applicant: Broadcom Corporation, Irvine, California 92618-7013 (US)
(72) Inventor: LeBlanc, Wifrid, Vancouver, B.C. V6M 3R4 (CA); Rambo, Darwin, V3S 7P3 Surrey B.C. (CA)
(74) Representative: Jehle, Volker Armin, Dipl.-Ing.

(57) **Abstract**

A method for operating a packet voice transceiver is disclosed. An embodiment of the present invention may compute one or more voice quality metrics during a voice call by using operational statistics that are generated or collected by packet voice transceiver functional elements. Based upon one or more values of the voice quality metric(s), it may modify system operation to optimize voice quality, and may log behavioral and performance information locally or transmit it to a remote location. Another embodiment of the present invention may include machine-readable storage having stored thereon a computer program having a plurality of code sections executable by a machine for causing the machine to perform the foregoing.

## Description

### CROSS-REFERENCE TO RELATED APPLICATIONS/INCORPORATION BY REFERENCE

[Not Applicable.]

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

There is an ever accelerating trend to move voice traffic from traditional circuit-switched networks to more flexible and efficient packet-switched networks. Successful convergence of voice and data on packet-switched networks depends, in part, upon the ability of packet-switched networks to provide voice quality on par with that of traditional circuit-switched networks. Traditionally, voice network quality was assessed using human subjects who gave subjective ratings. Due the number of subjects necessary for an accurate assessment, this approach is expensive and time-consuming. Voice quality of packet voice communication systems may be measured using live test subjects, using a laboratory test methodology called Perceptual Analysis/Measurement System (PAMS) as described in International Telecommunications Union - Telecommunication Standardization Sector (ITU-T) Specification P.800. With increasing frequency, however, network voice quality testing is done using automated methods involving in-band audio signaling and specialized test equipment. These automated test systems typically use testing techniques such as Perceptual Speech Quality Measurement (PSQM, described in ITU-T Specification P.861) and Perceptual Evaluation of Speech Quality (PESQ, described in ITU-T Specification P.862), currently the most popular of the automated methods. These automated methods are designed to provide objective, network voice quality assessments that accurately parallel the results of less-reliable subjective testing.

In spite of the success in removing the subjective nature of P.800 testing, the automated testing methods listed above still have a number of shortcomings. In particular, they do not recognize important characteristics of packet voice communication systems that can be perceived by users as significant impairments. The audible effects of excessive packet network transport delay is one packet voice network impairment that is not taken into account by automated test systems, and the effects of acoustic echo cancellers are not considered. An additional issue is that testing large numbers of voice paths through the network is not practical using this type of test approach, due to the cost of the equipment involved and the impact of testing activities on network subscribers. The cost of the test equipment is relatively high, and each voice path under test must be monitored separately, requiring its own piece of test equipment. Testing is intrusive, requiring the transmission of in-band audio signals over the path being tested. Such testing activity prohibits the use of that network resource by subscribers, who may experience a rise in call blockage. The loss in revenue and possible negative subscriber impact that may result from such testing is unacceptable to service providers.

A further shortcoming of conventional testing of packet voice networks is that system problems are only found if they exist while testing is being performed. Testing and problem resolution is generally reactive rather than proactive. Due to the adverse subscriber impact and the cost, such testing is normally performed only after problems have been reported by the users of the system. Even if the testing itself is automated, it is scheduled only after it has been decided that a problem that warrants testing exists. Once the actual testing begins, the service provider may find that, due to changes in network conditions, the tests show acceptable voice quality. Unfortunately, by the time that testing occurs, the subscriber has already been adversely impacted.

Currently available automated testing detect impairments on the voice paths that are chosen for observation, at the time that the observation takes place. It may not aid in the timely recognition of the broader, system-wide problems that may be affecting a large number of users. For example, insufficient network capacity may cause increases in network transport delay, increasing the audible end-to-end path delay. While one user may not find it sufficiently objectionable to report the problem, others may. If those complaint calls are taken by separate network management personnel, they may not recognize a pattern or determine the actual cause. Subsequent testing may not confirm the impairment due to a change in network conditions, further delaying problem resolution. Finding the source of the problem may involve running multiple tests on a large number of voice paths, tests which may themselves have network impact, and which are costly to perform.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Aspects of the disclosed invention relate in general to the broad subject matter of monitoring and managing packet voice communication systems. More specifically, certain embodiments of the invention relate to a method of operating a packet voice communication system in which existing system operating statistics are used to derive a quality of service metric indicative of perceived voice quality over the network. Additional embodiments relate to the use of such information to automatically diagnose problems within the network, and take corrective actions to minimize or eliminate the impairments.

Aspects of the present invention may be seen in a method of operating a packet voice transceiver. The method comprises collecting at least two statistics related to a packet voice call, and calculating at least one voice quality metric using the at least two statistics. At least one of the at least two statistics may be representative of the vocoder in use.

Additional aspects of the present invention may be seen in a method of operating a packet voice transceiver. The method comprises collecting at least one statistic related to a packet voice call, calculating at least one voice quality metric using the at least one statistic, and modifying the operation of the packet voice transceiver based upon the value of the at least one voice quality metric. The at least one statistic may be related to the encoding or decoding of speech data, and may comprise at least one of the type of vocoder, a measurement of jitter buffer underrun, a measurement of jitter buffer overrun, a measurement related to the operation of an acoustic echo canceller, echo return loss or echo return loss enhanced, bulk delay, a measurement related to the operation of a non-linear processor or echo suppressor, and the level of attenuation being applied. In an embodiment in accordance with the present invention, the at least one statistic may be related to the operation of a communication protocol, and may comprise at least one of an estimate of network latency or round-trip-delay, an estimate of network delay jitter, and an estimate of fraction of packets lost.

The calculating in an embodiment according to the present invention may comprise weighting each of the at least one statistic by a predetermined weight value to produce a weighted statistic, and combining the weighted statistics to produce the at least one voice quality metric. The modifying may comprise reconfiguring at least one element of the packet voice transceiver based upon a value of the at least one voice quality metric, and selecting a voice encoder or decoder algorithm based upon a value of the at least one voice quality metric. In another embodiment in accordance with the present invention, the modifying may comprise requesting a reconfiguration of the packet voice transceiver based upon a value of the at least one voice quality metric, and replacing at least one portion of a software program based upon a value of the at least one voice quality metric. The modifying may also comprise storing the at least one voice quality metric in a record of the call, and muting at least one audio path of the packet voice call based upon the value of the at least one voice quality metric.

Yet another aspect of the present invention may be observed in a machine-readable storage, having stored thereon a computer program having a plurality of code sections for implementing a packet voice transceiver, the code sections executable by a machine for causing the machine to perform the foregoing.

According to another aspect of the invention a method of operating a packet voice transceiver, the method comprises:
collecting at least two statistics related to a packet voice call; and
calculating at least one voice quality metric using the at least two statistics.

Advantageously at least one of the at least two statistics is representative of the vocoder in use.

According to another aspect of the invention a method of operating a packet voice transceiver, the method comprises:
collecting at least one statistic related to a packet voice call;
calculating at least one voice quality metric using the at least one statistic; and
modifying the operation of the packet voice transceiver based upon the value of the at least one voice quality metric.

Advantageously, at least one statistic is related to the encoding or decoding of speech data.

Advantageously, the at least one statistic comprises at least one of the type of vocoder, a measurement of jitter buffer underrun, a measurement of jitter buffer overrun, a measurement related to the operation of an acoustic echo canceller, echo return loss or echo return loss enhanced, bulk delay, a measurement related to the operation of a non-linear processor or echo suppressor, and the level of attenuation being applied.

Advantageously, at least one statistic is related to the operation of a communication protocol.

Advantageously, the at least one statistic comprises at least one of an estimate of network latency or round-trip-delay, an estimate of network delay jitter, and an estimate of fraction of packets lost.

Advantageously, the calculating comprises:
weighting each of the at least one statistic by a predetermined weight value to produce a weighted statistic; and
combining the weighted statistics to produce the at least one voice quality metric.

Advantageously, the modifying comprises:
reconfiguring at least one element of the packet voice transceiver based upon a value of the at least one voice quality metric.

Advantageously, the modifying comprises:
selecting a voice encoder or decoder algorithm based upon a value of the at least one voice quality metric.

Advantageously, the modifying comprises:
requesting a reconfiguration of the packet voice transceiver based upon a value of the at least one voice quality metric.

Advantageously, the modifying comprises:
replacing at least one portion of a software program based upon a value of the at least one voice quality metric.

Advantageously, the modifying comprises:
storing the at least one voice quality metric in a record of the call.

Advantageously, the modifying comprises:
muting at least one audio path of the packet voice call based upon the value of the at least one voice quality metric.

According to another aspect of the invention a machine-readable storage, having stored thereon a computer program having a plurality of code sections for implementing a packet voice transceiver, the code sections executable by a machine for causing the machine to perform the operations comprises:
collecting at least one statistic related to a packet voice call;
calculating at least one voice quality metric using the at least one statistic; and
modifying the operation of the packet voice transceiver based upon the value of the at least one voice quality metric.

Advantageously, the at least one statistic is related to the encoding or decoding of speech data.

Advantageously, the at least one statistic comprises the type of vocoder, a measurement of jitter buffer underrun, a measurement of jitter buffer overrun, a measurement related to the operation of an acoustic echo canceller, echo return loss or echo return loss enhanced, bulk delay, a measurement related to the operation of a non-linear processor or echo suppressor, and the level of attenuation being applied.

Advantageously, the at least one statistic is related to the operation of a communication protocol.

Advantageously, the at least one statistic comprises at least one of an estimate of network latency or round-trip-delay, an estimate of network delay jitter, and an estimate of fraction of packets lost.

Advantageously, the calculating comprises:
weighting each of the at least one statistic by a predetermined weight value to produce a weighted statistic; and
combining the weighted statistics to produce the at least one voice quality metric.

Advantageously, the modifying comprises:
reconfiguring at least one element of the packet voice transceiver based upon a value of the at least one voice quality metric.

Advantageously, the modifying comprises:
selecting a voice encoder or decoder algorithm based upon a value of the at least one voice quality metric.

Advantageously, the modifying comprises:
requesting a reconfiguration of the packet voice transceiver based upon a value of the at least one voice quality metric.

Advantageously, the modifying comprises:
replacing at least one portion of a software program based upon a value of the at least one voice quality metric.

Advantageously, the modifying comprises:
storing the at least one voice quality metric in a record of the call.

Advantageously, the modifying comprises:
muting at least one audio path of the packet voice call based upon the value of the at least one voice quality metric.

These and other advantages, aspects, and novel features of the present invention, as well as details of illustrated embodiments, thereof, will be more fully understood from the following description and drawings.

### BRIEF DESCRIPTION OF SEVERAL VIEWS OF THE DRAWINGS

Fig. 1 is a functional block diagram representing a communication system that enables the transmission of voice data over a packet-based system.

Fig. 1A is a functional block diagram representing another communication system that enables the transmission of voice data over a packet-based system.

Fig. 2 is a block diagram of an exemplary embodiment illustrating the services invoked by a packet voice transceiver system, in accordance with the present invention.

Fig. 3 illustrates another exemplary embodiment illustrating the services invoked by a packet voice transceiver system, similar to that in Fig. 2, but to which has been added far-end echo canceller and non-linear processor (NLP), in accordance with the present invention.

Fig. 4 shows a block diagram of an exemplary embodiment of a packet voice transceiver system in which statistics from various functional elements are used to generate a voice quality metric, in accordance with the present invention.

Fig. 5 illustrates an exemplary embodiment in which the operation of a packet voice transceiver system may be modified according to the value of a voice quality metric, in accordance with the present invention.

Fig. 6 shows a flow diagram illustrating a method of operating an embodiment in accordance with the present invention.

### DETAILED DESCRIPTION OF THE INVENTION

In an illustrative embodiment of the present invention, a signal processing system is employed to interface voice telephony devices with packet-based networks. Voice telephony devices include, by way of example, analog and digital phones, Ethernet phones, IP phones, interactive voice response systems, private branch exchanges (PBXs) and any other conventional voice telephony devices known in the art. Statistics generated during the operation of the signal processing system may be used to compute a quality of service (QOS) metric that is indicative of the communication link quality as perceived by the user. The described preferred embodiment of the signal processing system can be implemented with a variety of technologies including, by way of example, embedded communications software that enables transmission of voice data over packet-based networks. The embedded communications software may be run on programmable digital signal processors (DSPs), and used in gateways, remote access servers, PBXs, and other packet-based network appliances. Although the embodiments described below are with respect to the use of the invention(s) within systems performing voice communication, the embodiments described herein are for illustrative purposes only, as the present invention is not limited in this respect and may have significant utility in systems used for the communication of other real-time media, for example, voice, music, video, etc.

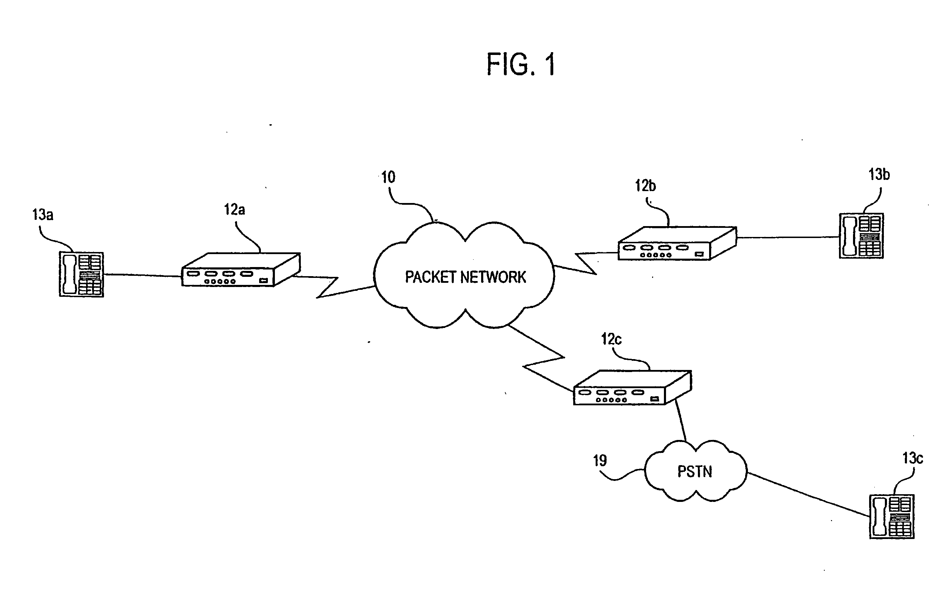

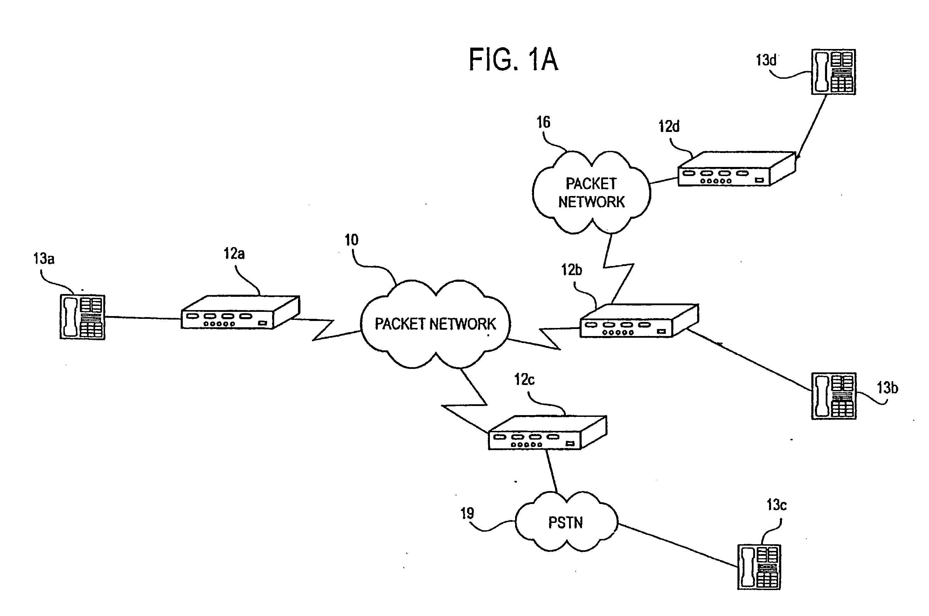

FIG. 1 is a functional block diagram representing a communication system that enables the transmission of voice data over a packet-based system such as voice-over-IP (VoIP, H.323), Voice over Frame Relay (VoFR, FRF-11), Voice Telephony over ATM (VTOA), or any other proprietary network, according to an illustrative embodiment of the present invention. In one embodiment of the present invention, voice data can also be carried over traditional media such as time-division multiplex (TDM) networks and voice storage and playback systems. Packet-based network 10 provides a communication medium between telephony devices. Network gateways 12a and 12b support the exchange of voice between packet-based network 10 and telephony devices 13a and 13b. Network gateways 12a and 12b include a signal processing system which provides an interface between the packet-based network 10 and telephony devices 13a and 13b. Network gateway 12c supports the exchange of voice between packet-based network 10 and a traditional circuit-switched network 19, which transmits voice data between packet-based network 10 and telephony device 13c. In the described exemplary embodiment, each network gateway 12a, 12b, 12c supports a telephony device 13a, 13b, 13c.

Each network gateway 12a, 12b, 12c could support a variety of different telephony arrangements. By way of example, each network gateway might support any number of telephony devices, circuit-switched networks and/or packet-based networks including, among others, analog telephones, Ethernet phones, fax machines, data modems, PSTN lines (Public Switched Telephone Network), ISDN lines (Integrated Services Digital Network), T1 systems, PBXs, key systems, or any other conventional telephony device and/or circuit-switched/packet-based network. In the described exemplary embodiment, two of the network gateways 12a, 12b provide a direct interface between their respective telephony devices and the packet-based network 10. The other network gateway 12c is connected to its respective telephony device through a circuit-switched network such as a PSTN 19. The network gateways 12a, 12b, 12c permit voice, fax and modem data to be carried over packet-based networks such as PCs running through a USB (Universal Serial Bus) or an asynchronous serial interface, Local Area Networks (LAN) such as Ethernet, Wide Area Networks (WAN) such as Internet Protocol (IP), Frame Relay (FR), Asynchronous Transfer Mode (ATM), Public Digital Cellular Network such as TDMA (IS-13x), CDMA (IS-9x), or GSM for terrestrial wireless applications, or any other packet-based system.

Another exemplary topology is shown in FIG. 1A. The topology of FIG: 1A is similar to that of FIG. 1 but includes a second packet-based network 16 that is connected to packet-based network 10 and to telephony device 13b via network gateway 12b. The signal processing system of network gateway 12b provides an interface between packet-based network 10 and packet-based network 16 in addition to an interface between packet-based networks 10, 16 and telephony device 13b. Network gateway 12d includes a signal processing system which provides an interface between packet-based network 16 and telephony device 13d.

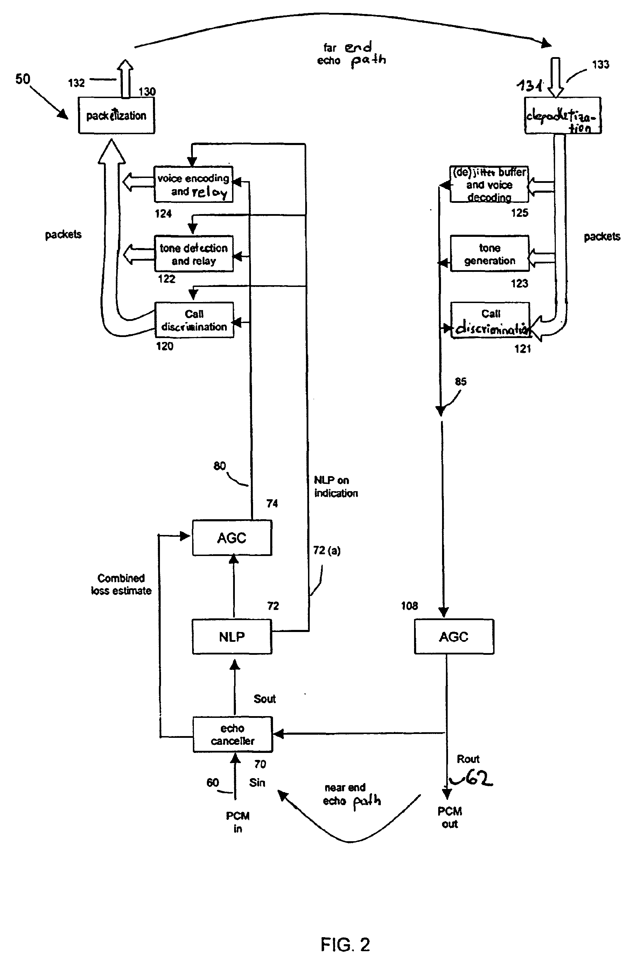

Fig. 2 is a block diagram of an exemplary embodiment illustrating the services invoked by a packet voice transceiver system 50, in accordance with the present invention. In an illustrative embodiment of the present invention, the packet voice transceiver system 50 resides in a network gateway such as network gateways 12a, 12b, and 12c of Fig. 1, and 12d of Fig. 1A. It may also be present in telephony devices 13a and 13b of Fig. 1, and 13d of Fig. 1A. In an exemplary embodiment, Packet voice transceiver system 50 provides two-way communication with a telephone or a circuit-switched network, such as a PSTN line (e.g. DS0). The packet voice transceiver 50 receives and transmits digital voice samples 60 and 62, respectively, such as a 64kb/s pulse code modulated (PCM) signal, from/to a telephone or circuit-switched network.

The incoming PCM signal 60 is initially processed by a near-end echo canceller 70 to remove near-end echoes that might otherwise be transmitted back to the far-end user. As the name implies, echoes in telephone systems are the return of the talker's voice resulting from the operation of the hybrid with its two-four wire conversion, or the acoustic echo of speech signal from the receiver to the transmitter of a voice terminal. If there is low end-to-end delay, echo from the far end is equivalent to sidetone (echo from the near-end), and therefore, not a problem. Sidetone gives users feedback as to how loudly they are talking and indeed, without sidetone, users tend to talk too loudly. However, far end echo delays of more than about 10 to 30 milliseconds (ms) significantly degrade the voice quality and are a major annoyance to the user.

For the purposes of this patent application, the user from which the ingress PCM signal 60 is received will be referred to as the near-end user. Thus the outgoing (egress) PCM signal 62 is provided to the near-end user. The user that receives the ingress packet voice signal 132, and that transmits the egress packet voice signal 133, will be referred to as the far-end user. However, it is to be understood that the "near-end" user, that sends and receives PCM signals 60 and 62, respectively, may reside either at a local device (such as a telephone) or at a device located across a circuit switched network. In an alternate embodiment such as, for example, a device that bridges an ATM network and an IP network, PCM signals 60 and 62 may instead be packet streams to be carried by a packet-based network, without departing from the spirit of the present invention.

Near-end echo canceller 70 is used to remove echoes of far-end speech present on the incoming PCM signal 60 before routing the incoming PCM signal 60 back to the far-end user. The near-end echo canceller 70 samples an outgoing PCM signal 62 from the far-end user, filters it, and combines it with the incoming PCM signal 60. In an exemplary embodiment, the near-end echo canceller 70 is followed by a non-linear processor (NLP) 72 which may mute the digital voice samples when far-end speech is detected in the absence of near-end speech. The NLP 72 may also inject comfort noise, which, in the absence of near end speech, may be roughly at the same level as the true background noise or at a fixed level.

After echo cancellation, the power level of the digital voice samples is normalized by automatic gain control (AGC) 74 to ensure that the conversation is of an acceptable loudness. Alternatively, the AGC can be performed before the near-end echo cancellation 70. However, this approach would entail a more complex design because the gain would also have to be applied to the sampled outgoing PCM signal 62. In the described exemplary embodiment, the AGC 74 is designed to adapt slowly in normal operation, but to adapt more quickly if overflow or clipping is detected. In one embodiment, the AGC adaptation is held fixed if the NLP 72 is activated.

In the voice mode, the transceiver 50 invokes three services, namely call discrimination 120, packet voice exchange 124, and packet tone exchange 122. The call discriminator analyzes the digital voice samples to determine whether a 2100 Hz tone (as in the case when the telephony device is a fax or a modem), a 1100 Hz tone or V.21 modulated high-level data link control (HDLC) flags (as in the case when the telephony device is a fax) are present. If a 1100 Hz tone or V.21 modulated HDLC flags are detected, a calling fax machine is recognized. The voice mode services are then terminated and the packet fax exchange is invoked to process the call. If a 2100 Hz tone is detected, the voice mode services are terminated and the packet data exchange is invoked. In the absence of a 2100 Hz tone, a 1100 Hz tone, or HDLC flags, the digital voice samples are coupled to the encoder system 124 and tone detection 122. The encoder system illustratively includes a voice encoder, a voice activity detector (VAD) and a comfort noise estimator. Tone detection 122 illustratively comprises a dual tone multi-frequency (DTMF) detector and a call progress tone detector. The outputs of the call discriminator 120, tone detection 122 and voice encoder 124 are provided to a packetization engine 130 which packetizes the data and transmits the packets 132 over the packet voice network.

Typical telephone conversations have as much as sixty percent silence or inactive content. Therefore, high bandwidth gains can be realized if digital voice samples are suppressed during these periods. In an illustrative embodiment of the present invention, a voice activity detector (VAD), operating under the packet voice exchange 124, is used to accomplish this function. The VAD attempts to detect digital voice samples that do not contain active speech. During periods of inactive speech, a comfort noise estimator, also operating under the packet voice exchange 124, provides silence identifier (SID) packets to the packetization engine 130. The SID packets contain voice parameters that allow the reconstruction of the background noise at the far end.

From a system point of view, the VAD may be sensitive to the change in the NLP 72. For example, when the NLP 72 is activated, the VAD may immediately declare that voice is inactive. In that instance, the VAD may have problems tracking the true background noise level. If the NLP 72 generates comfort noise during periods of inactive speech, it may have a different spectral characteristic from the true background noise. The VAD may detect a change in noise character when the NLP 72 is activated (or deactivated) and declare the comfort noise as active speech. For these reasons, in an illustrative embodiment of the present invention, the VAD is disabled when the NLP 72 is activated, as indicated by a "NLP on" message 72a passed from the NLP 72 to the voice encoding system 124.

The voice encoder, operating under the packet voice exchange 124, can be a straight 16-bit PCM encoder or any voice encoder which supports one or more of the standards promulgated by ITU. The encoded digital voice samples are formatted into a voice packet (or packets) by the packetization engine 130. These voice packets are formatted according to an applications protocol and outputted to the host (not shown). The voice encoder is invoked only when digital voice samples with speech are detected by the VAD.

In the described exemplary embodiment, voice activity detection is applied after the AGC 74. This approach provides optimal flexibility because the VAD and the voice encoder are integrated into some speech compression schemes such as those promulgated in ITU Recommendations G.729 with Annex B VAD (March 1996) - Coding of Speech at 8 kbits/s Using Conjugate-Structure Algebraic-Code-Exited Linear Prediction (CS-ACELP), and G.723.1 with Annex A VAD (March 1996) - Dual Rate Coder for Multimedia Communications Transmitting at 5.3 and 6.3 kbit/s, the contents of which is hereby incorporated by reference as through set forth in full herein.

Operating under the packet tone exchange 122, a DTMF detector determines whether or not there is a DTMF signal present at the near end. The DTMF detector also provides a pre-detection flag which indicates whether or not it is likely that the digital voice sample might be a portion of a DTMF signal. If so, the pre-detection flag is relayed to the packetization engine 130 instructing it to begin holding voice packets. If the DTMF detector ultimately detects a DTMF signal, the voice packets are discarded, and the DTMF signal is coupled to the packetization engine 130. Otherwise the voice packets are ultimately released from the packetization engine 130 to the host (not shown). The benefit of this method is that there is only a temporary impact on voice packet delay when a DTMF signal is pre-detected in error, and not a constant buffering delay. In one embodiment, whether voice packets are held while the pre-detection flag is active is adaptively controlled by the user application layer.

A call progress tone detector also operates under the packet tone exchange 122 to determine whether a precise signaling tone is present at the near end. Call progress tones are tones that indicate what is happening to dialed phone calls. Conditions like busy line, ringing called party, bad number, and others each have distinctive tone frequencies and cadences assigned them. The call progress tone detector monitors the call progress state, and forwards a call progress tone signal to the packetization engine 130 to be packetized and transmitted across the packet-based network. The call progress tone detector may also provide information regarding the near-end hook status which is relevant to the signal processing tasks. If the hook status is "on-hook," the VAD should preferably mark all frames as inactive, DTMF detection should be disabled, and SID packets should only be transferred if they are required to keep the connection alive.

The decoding system of the packet voice transceiver system 50 essentially performs the inverse operation of the encoding system. The decoding system comprises a depacketizing engine 131, a call discriminator 121, tone generation functionality 123, and a voice decoding system 125.

The depacketizing engine 131 identifies the type of packets received from the host (i.e., voice packet, DTMF packet, call progress tone packet, SID packet) and transforms them into frames that are protocol-independent. The depacketizing engine 131 then provides the voice frames (or voice parameters in the case of SID packets) to the voice decoding system 125 and provides the DTMF frames and call progress tones to the tone generation functionality 123. In this manner, the remaining tasks are, by and large, protocol independent.

The voice decoding system 125 illustratively includes a jitter buffer that compensates for network impairments such as delay jitter caused by packets not arriving at the same time or in the same order in which they were transmitted. In addition, the jitter buffer compensates for lost packets that occur on occasion when the network is heavily congested. In one embodiment, the jitter buffer for voice includes a voice synchronizer that operates in conjunction with a voice queue to provide an isochronous stream of voice frames to the voice decoder.

In addition to a voice decoder and a jitter buffer, the voice decoding system 125 also illustratively includes a comfort noise generator and a lost packet recovery engine, a VAD and a comfort noise estimator. Sequence numbers embedded into the voice packets at the far end can be used to detect lost packets, packets arriving out of order, and short silence periods. The voice synchronizer analyzes the sequence numbers, enabling the comfort noise generator during short silence periods and performing voice frame repeats via the lost packet recovery engine when voice packets are lost. SID packets can also be used as an indicator of silent periods causing the voice synchronizer to enable the comfort noise generator. Otherwise, during far-end active speech, the voice synchronizer couples voice frames from the voice queue in an isochronous stream to the voice decoder. The voice decoder decodes the voice frames into digital voice samples suitable for transmission on a circuit switched network, such as a 64kb/s PCM signal for a PSTN line. In the exemplary embodiment of FIG. 2, the output of the voice decoder is provided to AGC 108.

The comfort noise generator of the voice decoding system 125 provides background noise to the near-end user during silent periods. If the protocol supports SID packets, (and these are supported for VTOA, FRF-11, and VoIP), the comfort noise estimator at the far-end encoding system should transmit SID packets. Then, the background noise can be reconstructed by the near-end comfort noise generator from the voice parameters in the SID packets buffered in the voice queue. However, for some protocols, namely, FRF-11, the SID packets are optional, and other far-end users may not support SID packets at all. In these systems, the voice synchronizer must continue to operate properly. In the absence of SID packets, the voice parameters of the background noise at the far end can be determined by running the VAD at the voice decoder in series with a comfort noise estimator.

The tone generation functionality 123 illustratively includes a DTMF queue, a precision tone queue, a DTMF synchronizer, a precision tone synchronizer, a tone generator, and a precision tone generator. When DTMF packets arrive, they are depacketized by the depacketizing engine 131. DTMF frames at the output of the depacketizing engine 131 are written into the DTMF queue. The DTMF synchronizer couples the DTMF frames from the DTMF queue to the tone generator. Much like the voice synchronizer, the DTMF synchronizer provides an isochronous stream of DTMF frames to the tone generator. The tone generator of the tone generation system 123 converts the DTMF signals into a DTMF tone suitable for a standard digital or analog telephone, and provides the DTMF signal to AGC 108.

When call progress tone packets arrive, they are depacketized by the depacketizing engine 131. Call progress tone frames at the output of the depacketizing engine 131 are written into the call progress tone queue of the tone generation functionality 123. The call progress tone synchronizer couples the call progress tone frames from the call progress tone queue to a call progress tone generator. Much like the DTMF synchronizer, the call progress tone synchronizer provides an isochronous stream of call progress tone frames to the call progress tone generator. The call progress tone generator converts the call progress tone signals into a call progress tone suitable for a standard digital or analog telephone, and provides the call progress tone signal to AGC 108.

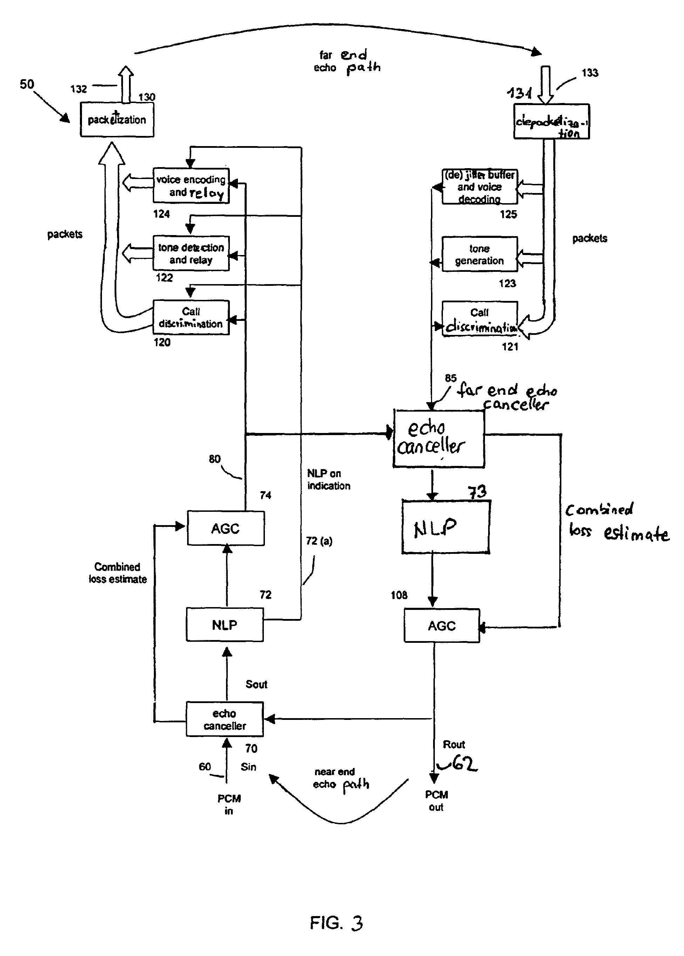

FIG. 3 illustrates an alternative embodiment of the present invention similar to that shown in Fig. 2, but to which has been added far-end echo canceller 110 and non-linear processor (NLP) 73. In the exemplary embodiment, far-end echo canceller 110 is used to remove echoes of near-end speech present on the outgoing PCM signal 62 before providing the outgoing PCM signal 62 to the near-end user or circuit-switched network. The far-end echo canceller 110 samples an ingress PCM signal 80 from the near-end user, filters it, and combines it with the egress PCM signal 85. In the exemplary embodiment, the far-end echo canceller 110 is followed by a NLP 73 that may mute the digital voice samples when near-end speech is detected in the absence of far-end speech. The NLP 73 may also inject comfort noise, which, in the absence of near end speech, may be roughly at the same level as the true background noise or at a fixed level. In an alternative embodiment, the NLP 73 suppresses the samples by a fixed or variable gain. In yet another embodiment, the NLP combines these two schemes.

In the exemplary embodiment shown in Fig. 3, the NLP 73 provides the echo-cancelled PCM signal to automatic gain control (AGC) element 108. AGC 108 normalizes the power level of the digital voice samples to ensure that the conversation is of an acceptable loudness. Alternatively, the AGC can be performed before the far-end echo cancellation 110. In the described exemplary embodiment, the AGC 108 is designed to adapt slowly in normal operation, but to adapt more quickly if overflow or clipping is detected. In one embodiment, the AGC adaptation is held fixed if the NLP 73 is activated. The AGC 108 provides the normalized PCM signal to the PCM output line 62.

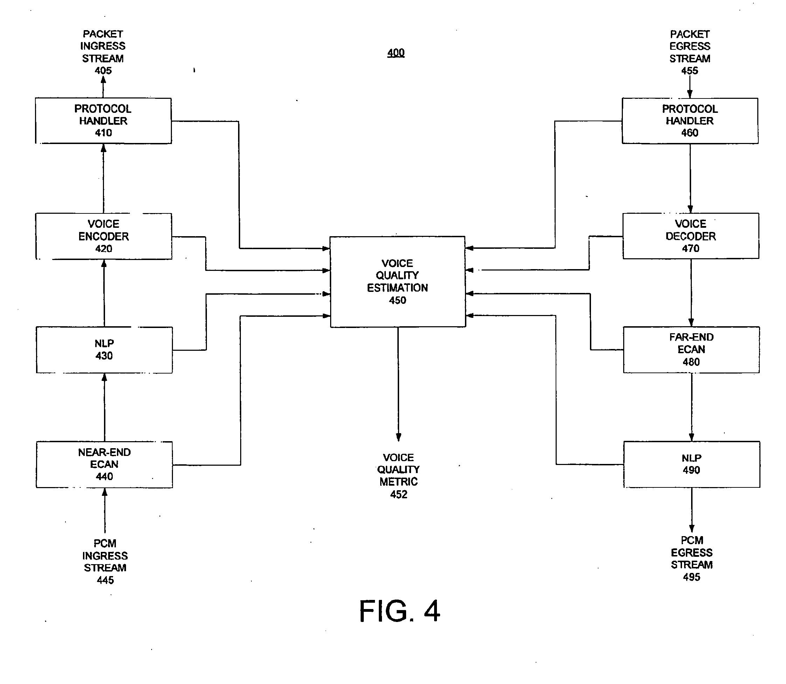

Fig. 4 shows a block diagram of an exemplary embodiment of a packet voice transceiver system 400 in which statistics from various functional elements are used to generate a quality of service metric, in accordance with the present invention. Packet voice transceiver 400 may correspond to packet voice transceiver 50 as shown in Figs. 2 and 3, and may be contained within, for example, network gateways 12a, 12b, and 12c of Fig. 1. As shown in the exemplary embodiment of Fig. 4, voice quality estimation function 450 receives operating statistics from a variety of functions within the packet voice transceiver 400. The operating statistics used by voice quality estimation function 450 in the generation of voice quality metric 452 may be selected by the user of packet voice transceiver 400, the network management personnel of the network in which packet voice transceiver 400 is used, or the manufacturer of packet voice transceiver 400 based upon, for example, the impact on the perceived voice quality of the events that the statistics track..

As shown in the illustration of Fig. 4, packet voice transceiver system 400 comprises an egress path that converts the speech data within egress packet stream 455 into PCM egress stream 495, and an ingress path which converts PCM ingress stream 445 into packets containing speech data transmitted to be transmitted via ingress packet stream 405. Ingress packet stream 405 and egress packet stream 455 may connect to a packet network such as packet network 10 of Fig. 1, while PCM ingress stream 445 and PCM egress stream 495 may, for example, be connected to a traditional circuit switched facility for transmission to a subscriber served via the public switched telephone network (PSTN), such as PSTN network 19 of Fig. 1.

In the egress path, egress packet stream 455 is received by protocol handler 460, which may implement a transport protocol such as, for example, the real time protocol (RTP) described in Internet Engineering Tack Force (IETF) Request for Comment (RFC) 1889. As a part of processing egress packet stream 455, protocol handler 460 may use information contained within received packets to calculate parameters useful in computing a voice quality metric. Parameters that may be useful in such computations include, for example, estimates of network delay jitter, and network latency or round-trip-delay. In an embodiment of the present invention, those estimates may be provided to voice quality estimating function 450, to be used in calculating the voice quality estimate 452.

Following depacketization of egress packet stream 455 by protocol handler 460, the compressed speech frames contained in egress packet stream 455 are passed to voice decoder 470. Voice decoder 470 converts the contents of the compressed speech frames to linear speech data and may implement, for example, a speech decoding algorithm compliant with the ITU-T G.726 specification, or the European Telecommunication Standards Institute (ETSI) EN 301 703 Adaptive Multi-Rate (AMR) speech coding specification. Although only two algorithms are referenced here, any of a large variety of speech decoding algorithms may be implemented by voice decoder 470. Information identifying the type of vocoder in use and the bit rate at which it is operating may be helpful in the calculation of the voice quality metric 452.

A jitter buffer is typically used, provided within voice decoder 470, to compensate for changes in packet network transit time, or "network delay jitter". Excessive network delay jitter may cause the jitter buffers to overrun or under-run, forcing the voice decoder 470 to discard or repeat speech frames, respectively. Both the discarding and the repeating of speech frames can result in audible impairments, therefore statistics such as jitter buffer under-run and jitter buffer over-run may help in assessing voice quality. Therefore, statistics indicating the frequency of jitter buffer under-run and over-run may be made available to voice quality estimation function 450 for use in the calculation of the voice quality metric 452, in an embodiment in accordance with the present invention.

As shown in the exemplary embodiment illustrated in Fig. 4, the linear speech data from voice decoder 470 is then passed to far-end acoustic echo canceller (ECAN) 480, which functions as described above with respect to Fig. 3. During operation, far-end ECAN 480 generates a number of parameters related to the algorithm used to cancel that portion of the speech signal contained in PCM ingress stream 445 that may appear in the speech data output by voice decoder 470. The far-end ECAN 480 may generate statistics indicating, for example, the echo return loss and bulk delay that is present in the speech data contained in the egress packet stream 455. Echo return loss and bulk delay may be indicative of speech signal degradation, and may be used by voice quality estimation function 450 in calculating a voice quality metric 452.

The speech data output by far-end ECAN 480 is then processed by far-end non-linear processor (NLP) 490, which may be used to suppress any residual echo components that may be present in the output of far-end ECAN 480. Depending upon the level of echo cancellation achieved by far-end ECAN 480, far-end NLP 490 may be enabled, and a greater or lesser level of attenuation set. As described above, the use of far-end NLP 490 may result in audible impairment of the speech data due to the clipping that may occur when far-end NLP 490 is active. Therefore, parameters relating to the activity of far-end NLP 490 such as, for example, whether or not far-end NLP 490 is enabled and the level of attenuation that is being applied, may be useful factors in calculating the voice quality metric 452. For that reason, statistics from far-end NLP 490 are shown in the exemplary embodiment of Fig. 4 as being provided to voice quality estimation function 450.

In the ingress path of the exemplary embodiment shown in Fig. 4, PCM ingress stream 445 is first processed by near-end ECAN 440, in order to remove from PCM ingress stream 445 any of the speech content of PCM egress stream 495. During operation, near-end ECAN 440 computes a variety of statistics related to the cancellation of that portion of the speech signal contained in PCM egress stream 495 that appears in the speech data in PCM ingress stream 445. In a manner similar to that for the egress path, near-end ECAN 440 may generate statistics indicating, for example, the echo return loss and bulk delay that has been measured. Echo return loss and bulk delay may indicate speech signal degradation, and may be used by voice quality estimation function 450 in calculating the voice quality metric 452.

The speech data output from near-end ECAN 440 is passed to near-end non-linear processor (NLP) 430, which may suppress any residual echo components present in the output of near-end ECAN 440. The decision to activate near-end NLP 430, and the amount of attenuation to be used may depend upon the level of echo cancellation achieved by near-end ECAN 440. The clipping that may result from the use of near-end NLP 430 may result in audible impairment of the speech data. For that reason, statistics related to the operation of near-end NLP 430, for example, whether or not near-end NLP 430 is enabled and the level of attenuation that is being provided, may also be factors for consideration in calculating the voice quality metric 452. For that reason, statistics from near-end NLP 430 are shown in the exemplary embodiment of Fig. 4 as being provided to voice quality estimation function 450.

Subsequent to the processing of the linear speech data by near-end NLP 430, the linear coded speech frames are passed to voice encoder 420. Voice encoder 420 converts the linear speech data to compressed speech frames using, for example, a speech encoding algorithm compliant with the ITU-T G.726 specification, or the ETSI EN 301 703 Adaptive Multi-Rate (AMR) speech coding specification. Although only two speech vocoding standards are listed here, the invention is not limited in this respect to use with any particular vocoding standards. As in the operation of the voice decoder described above, the distortions of voice encoding using a given algorithm are known, and the audible impairments have been measured. Therefore, the level of audible impairment due to any given voice encoder and bit rate may be incorporated into voice quality metric 452 generated by voice quality estimation function 450. The compressed speech frames generated by the voice encoder 420 are then packetized by protocol handler 410 for transmission via packet ingress stream 405. Statistics related to the operation of the protocol handler 410 may also be of significance in overall packet voice quality, and are shown here as a possible contributor to the voice quality metric 452 developed by voice quality estimation function 450.

The above examples of operational statistics that may be useful in the computation of voice quality metric 452 are for illustrative purposes, and are not intended to represent either an exhaustive list of the useful statistics, or an enumeration of factors that are required. Each embodiment of the present invention may incorporate a differently weighted set of operational statistics into voice quality metric 452, depending upon the characteristics of the packet voice transceiver and the packet network(s) over which it is used. The computation of voice quality metric 452 may be a linear or non-linear combination of the selected statistics, and the formula used for the calculation may change depending upon the value of one or more of the statistics used. To permit the customization of system behavior and performance, voice quality estimation function 450 may allow the user of packet voice transceiver 400, or the network management personnel, to adjust the computation of voice quality metric 452. These customizations may include, for example, the choice of statistics to be included in the computation of voice quality metric 452, and the manner in which the statistics are combined to form voice quality metric 452.

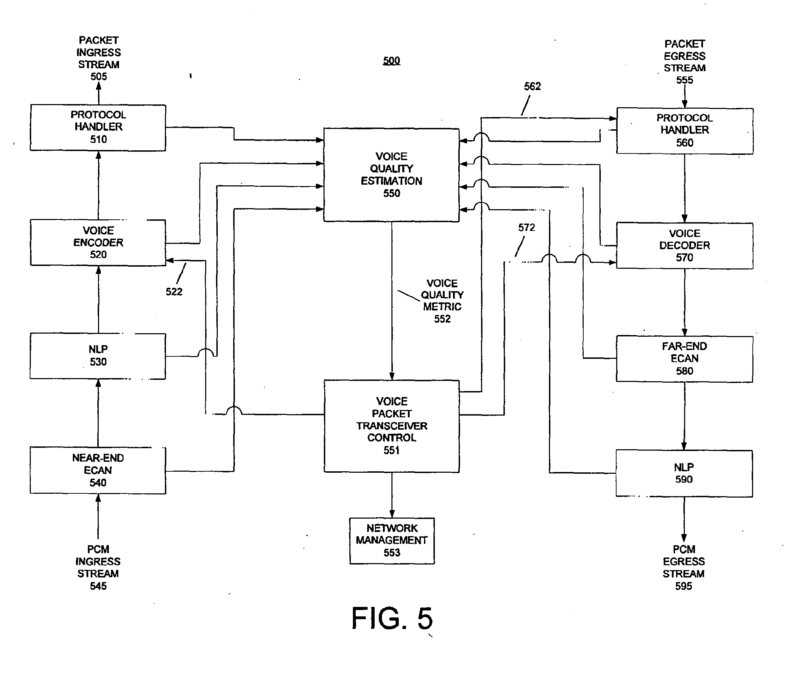

Fig. 5 illustrates an exemplary embodiment in which the operation of a packet voice transceiver system 500 may change according to the value of a voice quality metric, in accordance with the present invention. The exemplary embodiment shown in Fig. 5 is similar in operation to that previously shown in Fig. 4, with the addition of functionality that may permit automatic changes in system operation and the logging and reporting of system parameters, speech data, error records, and performance. For that reason, details of the operation of the common functionality will not be described here. As in the exemplary embodiment of Fig. 4, the architecture of Fig. 5 has both an egress and an ingress path, each containing a number of functions for the processing of speech data. In the exemplary embodiment of Fig. 5, however, voice quality metric 552 is passed to packet voice transceiver control function 551. Although voice quality metric 552 is shown as a single metric, it may be useful to pass more than one metric to packet voice transceiver control 551, to aid in the selection of the actions to be taken to adjust system performance.

As shown in Fig. 5, packet voice transceiver control 551 accepts voice quality metric 552 as input to the development of control signal 522 used in the control of voice encoder 520. Upon a drop in voice quality metric 552, control signal 522 may, for example, indicate a request that the voice coding algorithm in the voice encoder 520 be changed to an algorithm that performs better under the degraded conditions, or that the mode of operation be modified. Changes in system operation may be linked, for example, to the value of voice quality metric 552 falling below or rising above any of an array of adjustable thresholds. Upon crossing a given threshold, for example, a previously specified set of changes to system operating parameters or configuration may be attempted, system statistics or the system operating state may be logged, and/or data may be captured for later analysis. In an embodiment in accordance with the present invention, packet voice transceiver control 551 may generate signal 572 to request modification of the operation of voice decoder 570. In another embodiment, if voice quality metric 552 indicates that impairments have rendered the egress path unusable or excessively noisy, packet voice transceiver control 551 may elect to mute the egress voice path, to avoid annoying the user, and may generate an alarm indication (e.g. "red" or "yellow") to network management function 553. When voice quality metric 552 indicates an improvement in communications quality by rising above a given threshold, packet voice transceiver control 551 may, for example, attempt to restore previous operating conditions. The packet voice transceiver control 551 may also provide to the network management function 553 information on voice call quality and any automatic attempts at remediation for use in the further investigation of network problems or, for example, as support documentation in case of later network user inquiries. The use of voice quality metric 552 simplifies system operation, by reducing the number of parameters that must be understood and monitored by network management personnel. It also reduces the effort needed to integrate new functionality into communication systems supported by vendors having limited expertise in the field.

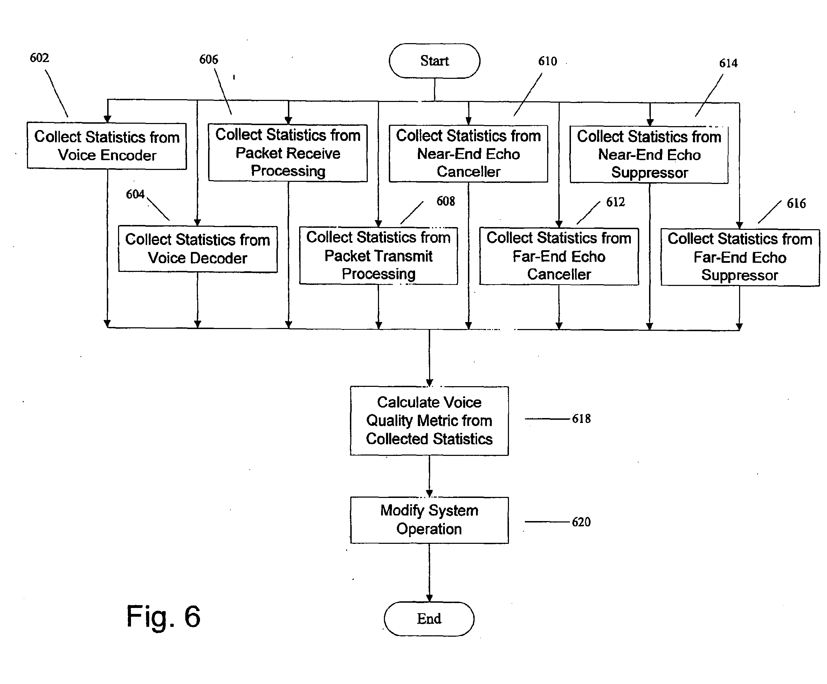

Fig. 6 shows a flow diagram illustrating a method of operating an embodiment in accordance with the present invention. The exemplary method shown in Fig. 6 includes a number of different activities, some of which may operate in parallel. In such an embodiment, functionality such as the voice quality estimation function 550 of Fig. 5 may collect operational statistics from, for example, a voice encoder function (block 602) such as voice encoder 520, a voice decoder function (block 604) such as voice decoder 570, a packet receive processing function (block 606) such as protocol handler 560, and a packet transmit processing function (block 608) such as protocol handler function 510. In an embodiment in accordance with the present invention, voice quality estimation function 550 may also collect information from a near-end echo canceller function (block 610) such as near-end ECAN 540, a far-end echo canceller function (block 612) such as far-end ECAN 580, a near-end echo suppressor function (block 614) such as NLP 530, and a far-end echo suppressor function (block 616) such as far-end NLP 590. The above listed statistics are for illustrative purposes, as an embodiment of the present invention may include a larger or smaller set of statistics without departing from the spirit of the present invention.

The statistics gathered by the voice quality estimation function 550 may then be used to calculate a voice quality metric (block 618), shown in Fig. 5 as voice quality metric 552. Voice quality metric 552 may be used by packet voice transceiver control 551 of Fig. 5 to modify system operation (block 620), and/or report troubles and system performance (block 622) to a remote location.

Although the present invention has been described above primarily with respect to its application to voice communication systems, it is not limited in this regard. The present invention may also be applied to other real-time communication media as well, e.g. music, video, etc., without departing from its spirit or scope.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention also may be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

Notwithstanding, the invention and its inventive arrangements disclosed herein may be embodied in other forms without departing from the spirit or essential attributes thereof. Accordingly, reference should be made to the following claims, rather than to the foregoing specification, as indicating the scope of the invention. In this regard, the description above is intended by way of example only and is not intended to limit the present invention in any way, except as set forth in the following claims.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method of operating a packet voice transceiver, the method comprising:
collecting at least two statistics related to a packet voice call; and
calculating at least one voice quality metric using the at least two statistics.

2. The method of claim 1 wherein at least one of the at least two statistics is representative of the vocoder in use.

3. A method of operating a packet voice transceiver, the method comprising:
collecting at least one statistic related to a packet voice call;
calculating at least one voice quality metric using the at least one statistic; and
modifying the operation of the packet voice transceiver based upon the value of the at least one voice quality metric.

4. The method of claim 3 wherein the at least one statistic is related to the encoding or decoding of speech data.

5. The method of claim 4 wherein the at least one statistic comprises at least one of the type of vocoder, a measurement of jitter buffer underrun, a measurement of jitter buffer overrun; a measurement related to the operation of an acoustic echo canceller, echo return loss or echo return loss enhanced, bulk delay, a measurement related to the operation of a non-linear processor or echo suppressor, and the level of attenuation being applied.

6. The method of claim 3 wherein the at least one statistic is related to the operation of a communication protocol.

7. The method of claim 6 wherein the at least one statistic comprises at least one of an estimate of network latency or round-trip-delay, an estimate of network delay jitter, and an estimate of fraction of packets lost.

8. The method of claim 3 wherein the calculating comprises:
weighting each of the at least one statistic by a predetermined weight value to produce a weighted statistic; and
combining the weighted statistics to produce the at least one voice quality metric.

9. The method of claim 3 wherein the modifying comprises:
reconfiguring at least one element of the packet voice transceiver based upon a value of the at least one voice quality metric.

10. A machine-readable storage, having stored thereon a computer program having a plurality of code sections for implementing a packet voice transceiver, the code sections executable by a machine for causing the machine to perform the operations comprising:
collecting at least one statistic related to a packet voice call;
calculating at least one voice quality metric using the at least one statistic; and
modifying the operation of the packet voice transceiver based upon the value of the at
least one voice quality metric.
